# EUROPÄISCHE PATENTSCHRIFT

(11) **EP 2 631 616 B1**
(45) Veröffentlichungstag und Bekanntmachung des Hinweises auf die Patenterteilung: **26.09.2018**
(21) Anmeldenummer: 13001942.5
(22) Anmeldetag: 02.11.2009
(51) Int. Cl.: G01H 1/00

(54) **Verfahren und Vorrichtung zur Schwingungsanalyse sowie Musterdatenbanken dafür und Verwendung einer Musterdatenbank**
Method and apparatus for vibration analysis and pattern databases therefor and use of a pattern database
Procédé et dispositif d'analyse des oscillations ainsi que bases de données types prévues à cet effet et utilisation d'une base de données type

(30) Priorität: 07.11.2008 DE 202008014792 U; 07.11.2008 WO PCT/EP2009/007830
(43) Veröffentlichungstag der Anmeldung: 28.08.2013
(62) Teilanmeldung aus: 09752114.0
(73) Patentinhaber: Qass GmbH, 58300 Wetter (DE)
(72) Erfinder: Seuthe, Ulrich, 58300 Wetter (DE)
(74) Vertreter: Grosse Schumacher Knauer von Hirschhausen

(56) Entgegenhaltungen:
- WO-A1-88/07911
- WO-A1-2006/114242
- DE-A1- 4 242 442
- DE-A1- 4 304 170
- DE-A1- 10 340 697
- DE-A1-102005 034 768
- US-A- 4 901 575

## Beschreibung

### Gebiet der Erfindung

Die Erfindung betrifft ein Verfahren und eine Vorrichtung zur Analyse des während der Verwendung eines Bauteils, bei der Prüfung eines Bauteils und/oder während des Bearbeitens eines Werkstückes durch Zerspanen, Schweißen, Umformen, Fügen und/oder Trennen oder dergleichen entstehenden Schwingungsspektrums. Die Erfindung betrifft ferner eine Musterdatenbank dafür und deren Verwendung.

### Hintergrund der Erfindung

Zur Beobachtung des maschinellen Bearbeitens von Werkstücken sind im Stand der Technik viele Verfahren bekannt.

So ist aus der DE 10 2005 034 768 A1 ein Verfahren zum Überwachen des Betriebszustands einer Werkzeugmaschine bekannt, um kritische Zustände bereits vor dem Eintreten eines Schadensfalls zu diagnostizieren und somit die durch Schäden und ungeplante Ausfälle verursachten Kosten und Aufwände zu vermeiden. Bei dem bekannten Verfahren werden rotierende Komponenten einer Werkzeugmaschine wie etwa Rotoren von Werkzeug- oder Motorspindeln, Pumpen oder Lüftern mittels eines Schwingungssensors überwacht. Hierzu werden niederfrequente Schwingungen durch den Schwingungssensor erfasst, um Unwuchten und/oder Werkzeugschwingungen zu erkennen und so z. B. ein schlecht gewuchtetes, falsch gespanntes oder verschlissenes Werkzeug zu erkennen. Die Auswertung erfolgt dabei grafisch auf Einzelwertbasis von Signalamplituden bei vorgegebenen Frequenzen. Eine derartige Auswertung einzelner niederfrequenter Schwingungen, wie sie auch aus der DE 102 44 426 D4 und der DE 103 40 697 A1 bekannt ist, ist jedoch für die Bewertung eines Zerspanungsprozesses im Hinblick auf die Qualität der Bearbeitung des Werkstücks nur bedingt geeignet.

Zur Optimierung eines Zerspanungsprozesses ist es aus der DE 698 04 982 T2 bekannt, niederfrequente Schwingungen während der Bearbeitung des Werkstücks zu erfassen und abhängig von Informationen über das Werkzeug Richtwerte für die Drehzahl des Werkzeugs anzugeben, mit denen unerwünschte Schwingungen, die als Rattern bekannt sind, beseitigt oder verringert werden können.

Die DE 44 05 660 A1 befasst sich ebenfalls mit dem Verringern oder Verhindern eines derartigen Ratterns, das über einen Schwingungssensor aufgenommen wird und bedient sich hierzu eines Regelungsmechanismus.

Aus dem D 94 03 901 ist eine Anordnung von Schwingungssensoren zur Signalgewinnung aus dem spanenden Bearbeitungsprozess bekannt. Hierbei ist ein Körperschallsensor an einem Tastarm befestigt, der in Kontakt mit dem Werkstück steht, so dass aus dem Bearbeitungsprozess generierte Schallsignale bzw. Ratterschwingungen vom Werkstück auf den Sensor übertragen werden. Zwar spricht das D 94 03 901 in diesem Zusammenhang von hochfrequenten Schallsignalen. Allerdings wird der Begriff "hochfrequent" im Zusammenhang mit der DE 38 29 825 A1 verwendet, die einen Frenquenzbereich zwischen 20 kH und 2 MHz einer Mittelwertbildung zuführt. Selbst dieser Frequenzbereich ist über die Tastarmankopplung der D 94 03 901 kaum übertrag- und erkennbar.

Aus der DE 44 36 445 A1 ein Verfahren zum Bewerten von Zerspanungsprozessen bekannt, bei dem Schwingungen/Körperschallsignale eines Werkzeugs einerseits unter Last und andererseits bei gleicher Drehzahl ohne Last erfasst werden und für jede Drehzahl ein eindimensionaler Vergleich der entsprechenden Schwingungszahl des Betriebs ohne Last und unter Last durchgeführt wird, um das Werkzeug zu bewerten.

Die WO 2006/114242 offenbart ein Verfahren zur zweidimensionalen Schwingungsanalyse bei dem die Signalleistung kontinuierlich mit einem Referenzwert verglichen wird und bei Abweichungen eine Störung gemeldet wird.

Aus der WO 88/07911 und der WO 89/12528 ist jeweils ein Schneidwerkzeug mit einem integrierten Schallsensor bekannt, der ein eindimensionales Spannungssignal liefert, das proportional zur Schwingungsfrequenz ist.

In der DE 38 29 825 C2 wird bei einer spanabhebenden Bearbeitung eines Werkstücks der Signalpegel eines Schallsensors in Abhängigkeit von der Frequenz erfasst und über Zeitintervalle gemittelt. Ein Vergleich der Mittelwerte mit Schwellen- oder Sollwerten führt zu Rückschlüssen über die Qualität des Werkzeugs oder der Bearbeitung.

Allen bekannten Verfahren haftet der Nachteil an, dass das Werkzeug und der Zerspanungsprozess nur unzureichend bewertet werden können.

Zudem sind die bekannten Verfahren auf zerspanende Bearbeitung beschränkt.

Im Stand der Technik sind keine zuverlässigen schallbasierten Verfahren zur Beobachtung anderer Bearbeitungsprozesse wie etwa Schweißen (Laserschweißen, Elektroschweißen, etc.), Umformen, Fügen und/oder Trennen oder dergleichen bekannt.

So werden derzeit optische Systeme zur Überwachung eines Laservorgangs eingesetzt, die das von der Einwirkstelle reflektierte Licht messen und aus dem Spektrum bzw. der Intensität abzuleiten versuchen, wie der tatsächliche Laservorgang vom Material aufgenommen wird. Befriedigende Ergebnisse sind damit nicht immer erreichbar, da mehrere Materialien miteinander zu verbinden sind und der Vorgang des Durchschweißens, also ob die Laserenergie auch die erforderliche Verschmelzung und thermische Durchdringung aller Bauteile bewirkt, durch an der Oberfläche reflektierte Laseremission nicht geprüft werden kann.

Zudem sind im Stand der Technik keine zuverlässigen schallbasierten Verfahren zur Beobachtung von Bauteilen im Betrieb, wie etwa eines Stahlrads eines Eisenbahnwagons während des Betriebs der Bahn, oder einer Komponente eines Motors während des Betriebs, bekannt. Die Vermeidung von Bauteilausfällen ist insbesondere bei sicherheitsrelevanten Anwendungen wie etwa in der Personenbeförderung durch z.B. Bahnen, Flugzeuge und Kraftfahrzeuge oder in Anlagen mit Gefahrenpotential wie etwa Kraftwerken unabdingbar und nur mit hohem Kostenaufwand durch regelmäßige Prüfungen außerhalb des Betriebs möglich.

### Zusammenfassung der Erfindung

Ausgehend hiervon liegt der Erfindung die Aufgabe zugrunde, ein Verfahren und eine Vorrichtung zur Schwingungsanalyse, insbesondere Schallanalyse, sowie eine Musterdatenbank dafür und eine Verwendung einer Musterdatenbank für eine Schwingungsanalyse zu schaffen, mit denen eine präzise Beobachtung und/oder Beurteilung eines Bauteils, Werkstückes, Werkzeugs und/oder Bearbeitungsprozesses ermöglicht werden.

Diese Aufgabe wird entsprechend den Merkmalen des Anspruchs 1, 11, 14 und 15 gelöst.

Demnach wird ein Verfahren zur Schwingungsanalyse geschaffen, bei dem Schwingungen eines Bauteils oder Werkstücks oder Werkzeugs erfasst und ausgewertet werden, wobei ein Schwingungsspektrum zu verschiedenen Zeiten oder kontinuierlich erfasst und einer mehrdimensionalen Auswertung unterworfen wird.

Die Schwingungen können dabei während der Verwendung eines Bauteils wie etwa beispielhaft eines Stahlrads oder einer Achse einer Eisenbahn im Betrieb, bei der Prüfung eines Bauteils im ein- oder ausgebauten Zustand ggf. unter Schwingungsanregung von außen durch Klopfen oder Schalleinkopplung oder unter Bewegung usw., und/oder während des Bearbeitens eines Werkstückes durch Zerspanen, Schweißen, Umformen, Fügen und/oder Trennen oder dergleichen entstehen. Die Verwendung einer Schwingungsanalyse für jede einzelne dieser Anwendungen und für weitere technisch vergleichbare Anwendungen ist von jeweils eigenständiger erfinderischer Bedeutung.

Die erfindungsgemäße Erfassung des Schwingungsspektrums zu verschiedenen Zeiten und vorzugsweise kontinuierlich oder quasi-kontinuierlich mit einer zweckmäßigen Sample-Rate erlaubt eine mehrdimensionale Datenauswertung, die Grundlage für eine präzise Beurteilung eines Bauteils, Werkstückes, Werkzeugs und/oder einer Bearbeitung ist.

Die mehrdimensionale Datenauswertung kann für eine bevorzugte Ausführungsform mit drei Dimensionen beispielhaft durch eine Landschaft illustriert werden, die sich dann im z.B. durch eine Frequenz-, eine Zeit- und eine Amplitudenachse aufgespannten Raum erstrecken kann. Die Landschaft visualisiert die Schallemissionen im zeitlichen Verlauf und weist dabei charakteristische Merkmale auf, die jeweils quasi einen Fingerabdruck bilden. Diese charakteristischen Merkmale sind mit geeigneten Methoden feststellbar. Ebenso sind Abweichungen von diesen charakteristischen Merkmalen feststellbar. Auch sind für bestimmte Fehler oder Fehlertypen charakteristische Merkmale in den mehrdimensionalen Daten feststellbar. Insgesamt kann auf Grundlage der mehrdimensionalen Daten, die in der bevorzugten Ausführungsform eine Landschaft im Frequenz-Zeit-Amplituden-Raum bilden, mit hoher Zuverlässigkeit die Qualität einer maschinellen Bearbeitung eines Werkstücks insbesondere noch während der Bearbeitung in Echtzeit festgestellt werden, und zwar universell bei einer Vielzahl von Bearbeitungsprozessen wie etwa Zerspanen, Schweißen, Umformen, Fügen, Trennen und/oder dergleichen. Auch kann der Verschleißgrad des Werkzeugs oder ein Werkzeugfehler wie etwa ein Bohrerbruch anhand der entsprechenden charakteristischen Merkmale festgestellt und identifiziert werden. Schließlich kann bei einer Bauteilprüfung die Abweichung von erwarteten charakteristischen Merkmalen festgestellt werden und die Übereinstimmung mit Fehlercharakteristiken kann einen bestimmten Fehler oder Fehlertyp diagnostizieren. Die Bauteilprüfung kann dabei selbst im Betrieb des Bauteils durchgeführt werden; z.B. kann im Betrieb eines Zuges an der Achse oder dem Rad ein Schwingungsspektrum und insbesondere ein Schallemissionsspektrum abgegriffen und auf charakteristische Merkmale geprüft werden, um beispielsweise einen Verschleiß, einen Verschleißgrad, einen Fehler wie etwa einen Bruch oder einen Riss oder aber ein Normverhalten oder ganz allgemein ein Abweichen vom Normverhalten festzustellen.

Vorzugsweise wird die Auswertung automatisiert auf Basis einer Mustererkennung durchgeführt. Für die mehr- und insbesondere dreidimensionale Mustererkennung können geeignete Algorithmen verwendet werden, die schnell und zuverlässig und mit einstellbaren Erkennungsparametern computerbasiert realisierbar sind und auf gespeicherte Schwingungsspektrum-Daten zugreifen oder die Schwingungsspektrum-Daten in Echtzeit verarbeiten.

Eine Musterdatenbank mit für eine bestimmte Anwendung geeigneten Mustern ist zweckmäßigerweise vorgesehen. Die Muster können dabei in Form von Musterlandschaftsabschnitten ggf. mit Toleranzbereichen gespeichert und/oder durch Funktionen definiert sein. Dies ermöglicht einerseits die Verwendung vorgegebener Muster für eine bestimmte Anwendung oder Anwendungsklasse, z.B. Muster für einen bestimmten Bohrbearbeitungsschritt. Zudem können während einer Lernphase Daten gesammelt und als Muster und ggf. mit Toleranzwerten gespeichert werden. So kann beispielsweise beim Bohren und Werkstückwechseln und Werkzeugwechseln das Schallemissionsspektrum aufgenommen und Muster können daraus extrahiert werden, auf deren Basis die Bewertung nachfolgender Bearbeitungen durchführbar ist. Damit ist eine individuelle Anpassbarkeit der Muster z.B. an einen bestimmten Prozess oder eine bestimmte Bearbeitungsmaschine oder ein bestimmtes Bauteil oder eine bestimmte Prüfsituation für ein Bauteil auf einfache Weise und ggf. automatisiert möglich. Die Muster können dabei Wertebereiche abdecken, um tolerierbare Abweichungen zu definieren und/oder die Erkennbarkeit zu vereinfachen.

Für eine automatisierte Bewertung ist es vorzugsweise vorgesehen, eine Umhüllende des erfassten Schwingungsspektrums oder von Abschnitten davon zu bilden und mit einer Vergleichsumhüllenden zu vergleichen. Die Umhüllende wird dabei beispielsweise über eine Glättfunktion, aus Mittelung im Raum benachbarter Datenpunkte oder unter Verwendung zweckmäßiger Verfahren zum Glätten mehrdimensionaler Daten gebildet. Die Abweichung zwischen der Umhüllenden und der Vergleichsumhüllenden kann als Maßstab für eine Beurteilung eines Bauteils, Werkstücks, Werkzeugs und/oder Prozesses, z.B. der Qualität eines Zerspanungsprozesses, herangezogen werden. Zudem erlaubt es die Verwendung einer Umhüllenden, Prozessabschnitte wie etwa einen Werktstückkontakt oder eine bestimmte Bearbeitung, automatisiert zu identifizieren. Zudem wird die Mustererkennung durch Verwendung einer Umhüllenden vereinfacht und die Erkennungsrate wird verbessert.

Das Schwingungsspektrum wird vorzugsweise hochfrequent und/oder breitbandig erfasst und ausgewertet.

Eine Breitbandigkeit ist zweckmäßig, da charakteristische Merkmale in Bereichen des Schallemissionsspektrums auftreten können, die in der Frequenz weit voneinander beabstandet sind. So weist eine Rissbildung einen hochfrequenten "Fingerabdruck" auf, während ein Bohrerbruch verhältnismäßig geringerfrequente Merkmale im Schallemissionsspektrum hinterlässt und ein Maschinenfehler wie etwa ein fehlerhafter Rundlauf einer Drehbank charakteristische Merkmale im niederfrequenten Bereich des Schwingungsspektrums hinterlässt. Vorzugsweise wird das gesamte Frequenzspektrum der Schwingungen erfasst, wozu ggf, verschiedene Sensoren vorgesehen sein können, die verschiedene Frequenzbereiche abdecken. In der bevorzugten Ausführungsform wird lediglich ein Sensor verwendet, nämlich ein Schallsensor, in anderen Ausführungsformen können jedoch auch andere Schwingungssensoren zusätzlich oder alternativ verwendet werden.

Das hochfrequente Erfassen ermöglicht vorteilhafterweise eine Beurteilung auch von mikroskopischen Vorgängen am oder im Bauteil oder Werkstück oder Werkzeug.

So werden beispielsweise bei der Zerspanung eines Festkörpers Materialteile gegen ihre Bindungskraft aus ihrer Position gerissen. Die dazu erforderliche Kraft wird durch ein Werkzeug aufgebracht. Die Bindungskräfte bestehen zwischen mikroskopisch kleinen Teilen. Die Zerspanung kann deshalb auch als Aufeinanderfolge von mikroskopischen Trennungen begriffen werden. Jede dieser kleinen Trennungen schickt einen Impuls durch die angrenzenden Materialien. Durch diese Impulse entstehen Schwingungen. Die Schwingungsfrequenzen hängen ab von der Impulsdauer und der Elastizität des Materials. Jede Zerspanung besteht dabei aus einer Aufeinanderfolge von sehr vielen mikroskopischen Trennungen, also auch aus einer Abfolge vieler kleiner Impulse. Diese Impulse entstehen mit einer zeitlichen Abfolge. Nach einer erfolgten mikroskopischen Trennung baut sich erneut eine Trennkraft an den nächsten noch gebundenen Materialpartikeln auf dem Weg des Zerspanungswerkzeugs auf. Nach Überschreiten der nötigen Trennkraft entsteht der nächste Impuls. Damit ergeben sich immer neue Schwingungsanregungen, deren zeitliche Verteilung mit der Schnittgeschwindigkeit und der Größe der abgetrennten Materialpartikel zusammenhängt. Daraus ergibt sich eine Schwingungsanregung von Material und Werkzeug, deren Frequenz und Amplitudenverlauf charakteristisch für den jeweiligen Zerspanungsvorgang sind.

Diese mikroskopischen Trennungen führen folglich zu einem hochfrequenten Zerspanungsschwingungsspektrum, aus dem sich Charakteristika über den tatsächlichen Zerspanungsvorgang auf mikroskopischer Ebene gewinnen lassen.

Bei den weiteren Anwendungen der Erfindung wie etwa Schweißen oder der Bauteilprüfung treten ebenfalls hochfrequente charakteristische Merkmale im Schwingungsspektrum auf.

Das erfasste Schwingungsspektrum wird vorzugsweise einer Frequenz-Zeit-Analyse unterworfen. Durch die Frequenz-Zeit-Analyse können einerseits über die Zeitachse die aufgenommenen Schwingungen dem Prozessverlauf zugeordnet werden und andererseits die interessierenden Schwingungen von nicht interessierenden Schwingungen wie etwa Maschinenschwingungen und Störschwingungen separiert werden, die andere Frequenzbereiche belegen. Die Auswertung kann sich daher auf den für die jeweilige Anwendung charakteristischen Bereich konzentrieren.

Das Schwingungsspektrum wird vorzugsweise mit einer Frequenzauflösung erfasst, die der mikroskopischen Körnigkeit des Materials des Bauteils oder Werkstücks und ggf. weiteren anwendungsabhängigen Faktoren entspricht. Bei einem Zerspanungsprozess ist z.B. die Zerspanungsbearbeitungsgeschwindigkeit als weiterer Faktor zu berücksichtigen. So ist beispielsweise bei einer Zerspanungsbearbeitungsgeschwindigkeit von 3000 m/min eine Frequenzauflösung von 50 MHz erforderlich, um Strukturen der Größenordnung von 1 µm durch zugeordnete Zerspanungsschwingungen zu erfassen. Abhängig von der mikroskopischen Körnigkeit, die oberhalb oder unterhalb des µm-Bereichs liegen kann, und der Zerspanungsbearbeitungsgeschwindigkeit ergeben sich höhere oder niedrigere Frequenzauflösungen. Erfindungsgemäß liegt die Frequenzauflösung vorzugsweise bei 50 MHz, um alle Anwendungen abzudecken, kann jedoch auch im Bereich von 40 MHz, 30 MHz, 20 MHz oder 10 MHz liegen.

Das Schwingungsspektrum kann erfasst werden mit den Koordinaten Frequenz f, Zeit t und Amplitude A. Diese Erfassung eignet sich für eine numerische Analyse im Computer, wobei die Koordinaten auch Funktionen a(f), b(t) und/oder c(A) der Frequenz f, der Zeit t bzw. der Amplitude A sein können, oder a(f, t, A), b(f, t, A) und/oder c(f, t, A), so dass ein dreidimensionales Array in einer gegebenen funktionellen Abhängigkeit zu f, t, A gespeichert ist, beispielsweise (lf, mt, nA^{x}), wobei l, m, n, x beliebige Zahlen sind. Zur Illustration und/oder händischen Analyse kann das Schwingungsspektrum mit den drei Koordinaten grafisch dargestellt werden. Hierbei kann eine dreidimensionale Darstellung gewählt werden, bei der die Frequenz und die Zeit eine Ebene aufspannen und durch die Amplitude (oder eine Funktion davon) ein Höhenprofil definiert wird. Eine derartige grafische Darstellung erleichtert die Erkennung der zur Bewertung relevanten Schwingungen, z.B. können diese durch die Trennung auf der Zeitachse dem Bearbeitungsablauf zugeordnet werden und sind von Maschinenschwingungen und anderen Störschwingungen auf der Frequenzachse getrennt.

Zur Aufnahme der Schwingungen wird vorzugsweise ein Schallsensor, insbesondere ein Piezo-Schallsensor, verwendet. Derartige Schallsensoren können die erfindungsgemäß erforderlichen hohen Frequenzen verarbeiten, weisen eine große Frequenzbandbreite auf, sind kostengünstig herstellbar und wartungsfrei.

Der Sensor, insbesondere der Schallsensor, der am Bauteil, Werkstück oder am Werkzeug oder einem mit dem Bauteil, Werkstück und/oder Werkzeug schwingungsgekoppelten Bauteil angeordnet sein kann, wird nach seiner Montage und vorzugsweise auch periodisch danach oder vor jeder Verwendung kalibriert. Hierdurch wird eine gleich bleibend hohe Präzision der Messung sichergestellt. Eine Kalibrierung ist insbesondere dann besonders zweckmäßig, wenn der Sensor an einem neuen Werkstück angebracht wird oder zwecks Wartung gelöst und erneut angebracht werden muss, da sich durch die Anbringung ein anderes Kopplungsverhalten einstellen kann. Zur Kalibrierung wird erfindungsgemäß der Schallsensor mit einem bestimmten elektrischen Impuls beaufschlagt, um ein Schallsignal zu emmitieren. Anschließend wird das Echo des Schallsignals erfasst und mit einem Soll-Echo verglichen. Dadurch kann die Güte der Ankopplung des Schallsensors an das Werkstück oder Werkzeug oder Bauteil ermittelt und bei der Messung berücksichtigt werden.

Die Auswertung erfolgt vorzugsweise in Echtzeit. Dadurch entfällt die Notwendigkeit, Daten zu speichern. Eine Speicherung der Daten kann zweckmäßig sein bei sicherheitsrelevanten Bauteilen zum Nachweis der Fehlerfreiheit, oder für den Nachweis eines Fehlers. Die Daten können vollständig für den gesamten Bearbeitungsprozess oder die gesamte Überwachungsdauer eines Werkstücks oder Bauteils gespeichert werden oder nur ausschnittsweise in Zeitbereichen, in denen interessierende Merkmale erkannt worden sind.

Ein weiterer Aspekt der Erfindung betrifft die Transformation des Schwingungsspektrums, oder eines interessierenden Frequenzbereichs davon, in das hörbare Schallspektrum mittels einer geeigneten, z.B. linearen, Funktion oder Abbildung. Dies ermöglicht eine akustische Beobachtung bzw. Bewertung durch eine Person. Zweckmäßigerweise wird die akustische Beobachtung ergänzend zur mehrdimensionalen Auswertung durchgeführt, kann diese aber auch ersetzen.

In einer besonders zweckmäßigen Ausführungsform werden für Schäden typische Muster im Schwingungsspektrum erkannt. Hier kann u.a. eine Vereinfachung der Auswertung sich ergeben, die sich auf eine Fehlererkennung beschränkt.

Die Erfindung ermöglicht es auch, nicht direkt mit der Bearbeitung eines Werkstücks in Zusammenhang stehende Fehler zu erkennen. Beispielsweise können durch Temperaturschwankungen hervorgerufene Spannungsrisse oder allgemein Schäden durch Fremdeinwirkung erkannt werden.

Ferner können Überlastungs- und/oder Ermüdungsrisse erkannt werden. Dies ist insbesondere bei der Prüfung eines Bauteils oder bei der Beobachtung eines Bauteils im Betrieb vorteilhaft, z.B. bei der Überwachung eines Rads einer Eisenbahnwaggons.

Die Erfindung schafft damit Verfahren und Vorrichtungen, die eine automatisierte Überwachung, Qualitätssicherung und Prüfung von Bauteilen, Werkstücken und Bearbeitungsprozessen ermöglichen.

Weitere Merkmale und Ausgestaltungen der Erfindung ergeben sich aus der nachfolgenden Beschreibung unter Bezugnahme auf die beigefügten Zeichnungen.

### Figurenbeschreibung

Fig. 1 illustriert schematisch eine Vorrichtung zum Bewerten von Zerspanungsprozessen.
Fig. 2 und 3 zeigen Kristallite in einem Stahlgefüge.
Fig. 4 illustriert eine dreidimensionale grafische Darstellung eines Schwingungsspektrums.
Fig. 5 illustriert einen Ausschnitt aus Fig. 4 in einer zweidimensionalen Darstellung.
Fig. 6 ist ein Schnitt durch Fig. 4 parallel zur f-Achse.
Fig. 7 und 8 zeigen eine Projektion des gesamten aufgenommenen Frequenzumfangs der Fig. 1 auf die Zeitachse für verschiedene Werkzeuge.

### Beschreibung der Ausführungsformen

Die Erfindung wird nachfolgend zunächst am Ausführungsbeispiel eines Zerspanungsprozesses beschrieben.

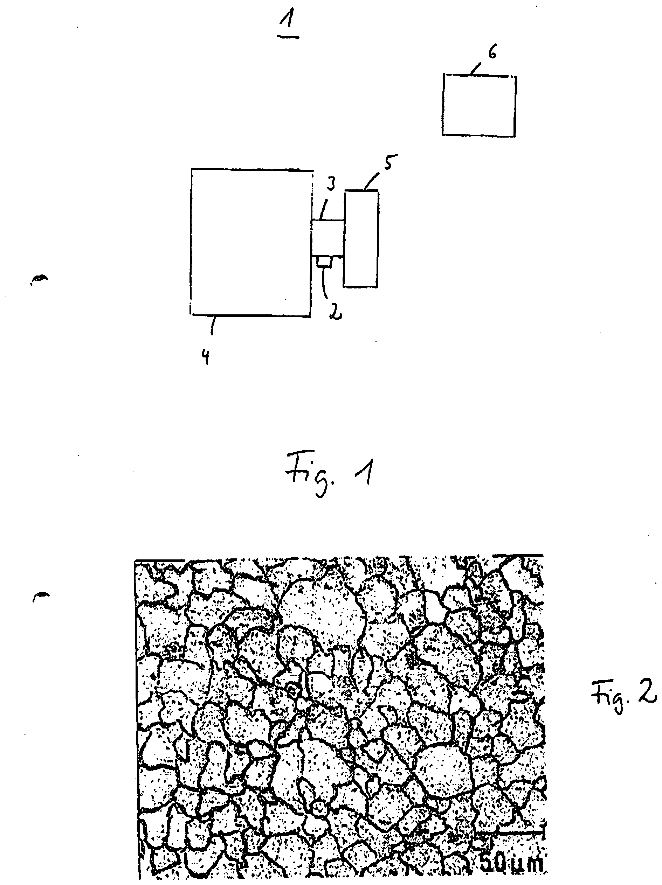

Die in Fig. 1 dargestellte Vorrichtung 1 zum Durchführen einer Schwingungsanalyse, hier zwecks Bewertung eines Zerspanungsprozesses, umfasst einen Sensor 2 zum Erfassen von Schwingungen, der beispielhaft an einem Werkzeug 3 einer Werkzeugmaschine 4 angeordnet ist, die ein Werkstück 5 zerspanend bearbeiten kann. Der Sensor 2 ist mit einer Auswerteinrichtung 6, z. B. einem Computer, verbunden. In weiteren Ausgestaltungen der Erfindung wird das Werkstück anderweitig bearbeitet, z.B. geschweißt, umgeformt, gefügt und/oder getrennt, oder es wird ein Bauteil geprüft oder während dessen Verwendung in montiertem Zustand beobachtet.

Der Sensor 2 ist vorzugsweise ein Körperschallsensor, z.B. ein Piezo-Sensor, und kann bevorzugt nicht nur Körperschallsignale aufnehmen, sondern auch aussenden. Das Aussenden von Körperschallsignalen ist insbesondere für die Prüfung von Bauteilen zweckmäßig, da diese damit in Schwingung versetzt werden können. Andere Arten von Sensoren sind ebenfalls verwendbar, solange sie Schwingungen im interessierenden Frequenzbereich erfassen können, z.B. Bewegungssensoren.

Angekoppelt ist der Sensor 2 entweder wie beispielhaft dargestellt am Werkzeug 3 oder an der Werkzeugmaschine 4 oder dem Werkstück 5 oder einem damit schwingungsgekoppelten Teil derart, dass er Schwingungen des Werkstücks 5 und/oder des Werkzeugs 3 erfassen kann. Im einfachsten Fall ist der Sensor festgeschraubt.

Die Werkzeugmaschine 4, z.B. eine Fräsmaschine, führt einen Bearbeitungsvorgang am Werkzeug 5, z.B. einem Block Stahl, mit dem Werkzeug 3, z.B. einem Fräser, insbesondere automatisiert aus, um aus Block Stahl beispielsweise ein Zahnrad zu formen.

Während des Bearbeitungsvorgangs entstehen Schwingungen am Werkstück 5 und Werkzeug 3, die vom Sensor 2 aufgenommen werden. Hierzu ist der Sensor 2 derart ausgebildet, dass er Frequenzen zwischen einem unteren Grenzwert und einem oberen Grenzwert erfassen kann. Idealerweise ist der untere Grenzwert 0 und der obere Grenzwert ∞, so dass das gesamte interessierende Spektrum aufgenommen werden kann. In der Praxis ist ein oberer Grenzwert von mindestens 50 MHz, bevorzugt mindestens 100 MHz, zweckmäßig. Frequenzen unterhalb von 90 kHz oder 40 kHz werden in der Praxis vorzugsweise gedämpft oder abgeschnitten, da sie keinerlei verwertbare Information enthalten, so dass ein entsprechender unterer Grenzwert zweckmäßig ist, aber auch bei 200 kHz, 500 kHz oder 1 MHz liegen kann.

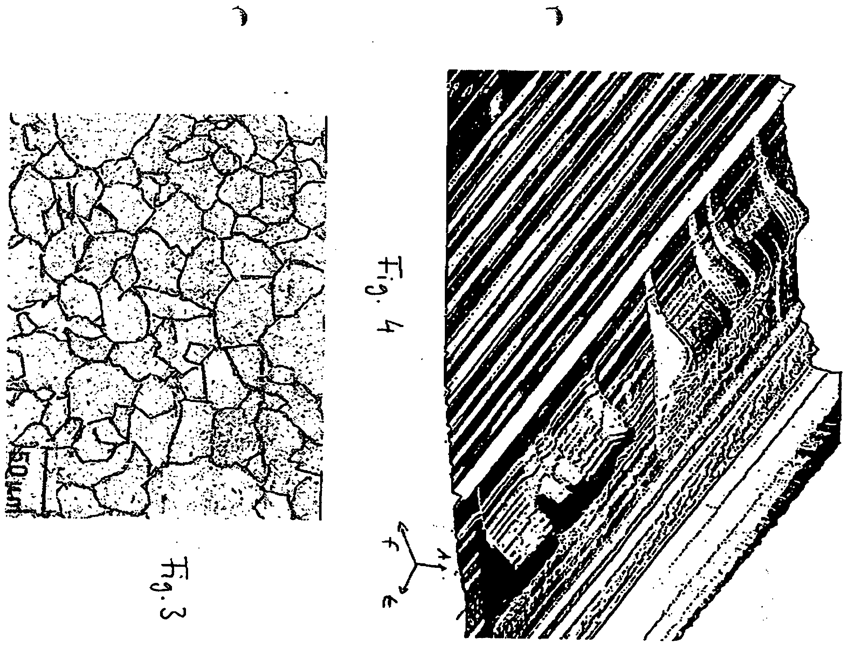

Der tatsächliche Frequenzbereich des Sensors 2 sollte anhand des zu bearbeitenden Materials und der Bearbeitungsgeschwindigkeit gewählt werden. Fig. 2, 3 zeigen typische Kristallite in einem Stahlgefüge. Ersichtlich variieren die Korngrößen variieren in ihrer Größe, und zwar je nach Abkühlungsprozess und Legierungsbestandteilen. Ist die Körnigkeit des Materials z.B. 1 µm und die Bearbeitungsgeschwindigkeit 3000 m/min, sollte der obere Grenzwert mindestens 50 MHz betragen, um die interessierenden Zerspanungsschwingungen erfassen zu können. Bei einer Bearbeitungsgeschwindigkeit von 400 m/ min und einer durchschnittlichen Korngröße von 1 µm ergibt sich eine Mindestauflösung von 6,66 MHz. Da jedoch die Werkzeugspitze (z.B. 1mm) im Vergleich zu den Kristalliten (z.B. 1µm) sehr groß ist, erfasst sie immer sehr viele (z.B. 1000) Kristallite gleichzeitig, und zwar leicht versetzt um Bruchteile der Korngröße; eine wesentlich höhere Frequenzauflösung als die Mindestauflösung ist daher zweckmäßig, um alle interessanten Frequenzinformationen über den Zerspanungsprozess zu erfassen.

Die vom Sensor 2 während der spanenden Bearbeitung des Werkstücks 5 erfassten Schwingungen werden mehrdimensional ausgewertet. Hierfür kann das erfasste Schwingungsspektrum in der Auswerteeinheit 6 zwischengespeichert werden, die vorzugsweise ein Computer mit entsprechender Schnittstelle und geeigneten Speichermedien ist.

In der Auswerteeinheit 6 kann eine Frequenz-Zeit-Analyse dergestalt erfolgen, dass das Schwingungsspektrum noch während der Erfassung oder danach grafisch dargestellt wird und/oder numerisch analysiert wird.

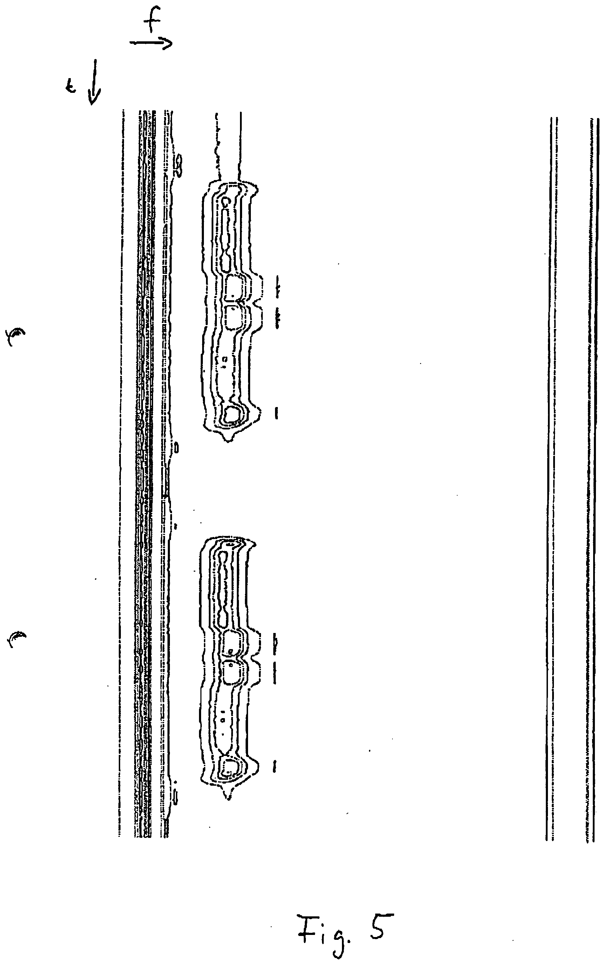

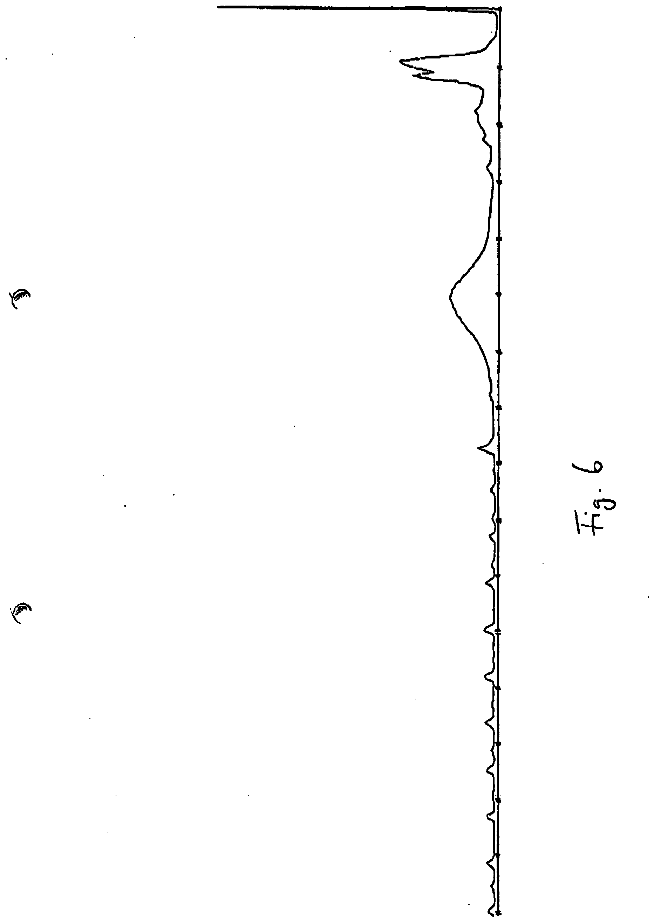

Eine Darstellung kann wie in Fig. 4 illustriert dreidimensional erfolgen mit den Koordinaten Zeit, Frequenz und Amplitude (oder maximale Amplitude oder Intensität oder dergleichen) oder wie in Fig. 5 illustriert zweidimensional, wobei Höhenlinien die Amplitude sichtbar machen. In Fig. 5 ist links bei niedrigen Frequenzen die Antriebswelle sichtbar, bei rechts befinden sich hochfrequente Störungen und dazwischen ist das aufeinanderfolgende Schleifen zweier Zähne einer KFZ-Getriebewelle sichtbar. Ein Schnitt zu einer Zeit t ist in Fig. 6 dargestellt, die ein typisches Frequenzspektrum zeigt.

Es sind Muster erkennbar, insbesondere die Inseln in Fig. 5, die charakteristisch für den jeweiligen Prozess sind. Derartige Muster ergeben sich auch für Fehler. Durch Mustererkennung können folglich Prozessschritte erkannt werden, beurteilt werden, indem z.B. ein Maß für die Abweichung von einem Muster ermittelt wird, und auch Fehler erkannt und identifiziert (Bohrerbruch, kein Werkzeug etc.) werden, jedenfalls Abweichungen vom Normverhalten noch während einer Bearbeitung erkannt werden.

Die Auswertung kann anhand Fig. 4, 5 oder 6 erfolgen, die mit Vergleichsdaten oder Erfahrungswerten verglichen und aus denen Charakteristika über den Zerspanungsprozess abgeleitet werden können. Hierzu können Muster aus einer Musterdatenbank verwendet werden. Die Muster können in einer Musterdatenbank gespeicherte oder funktional beschriebene charakteristische Flächenabschnitte sein, deren Vorhandensein im erfassten Schwingungsspektrum festzustellen ist.

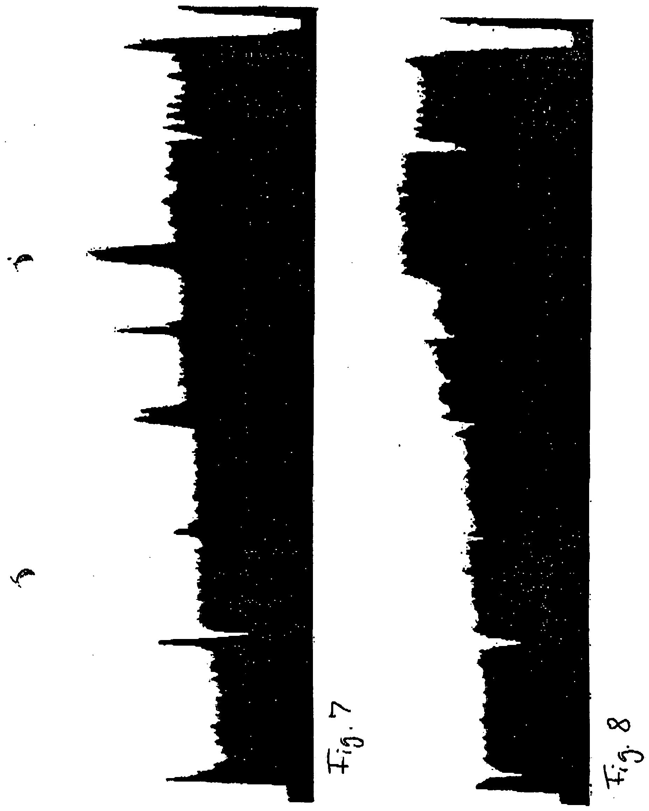

Fig. 7 und 8 zeigen eine Projektion des gesamten aufgenommenen Frequenzumfangs der Fig. 1 auf die Zeitachse, so dass ein zweidimensionales Bild entsteht. Es handelt sich um Aufzeichnungen zweier unmittelbar aufeinander folgender Drehprozesse an einem Stahlbauteil. Fig. 7 zeigt die Emission beim Einsatz eines abgenutzten Werkzeugs, während Fig. 8 die Emission nach Einbau eines neuen Werkzeugs zeigt. Fig. 8 ist ersichtlich glatter und könnte als Referenz für den bestimmten Drehprozess verwendet werden, wobei Unterschiede hierzu zur Begutachtung des Werkzeugs und/oder des Werkstücks herangezogen werden können. Hierbei können in einer automatisierten Auswertung der erfassten dreidimensionalen Datensätze entsprechende Referenz-Umhüllende um die erfasste Landschaft gelegt wird. Als Maßstab für die Qualität der Bearbeitung, des Werkzeugs etc. könnten Differenzen, Mittelwerte, Streuungen usw. verwendet werden.

Das Schwingungsspektrum hängt dabei nicht nur von dem Werkzeug und dem Werkstück ab, sondern auch von der Bearbeitungsgeschwindigkeit, der Werkzeugmaschine, dem Verbrauchsmaterial (z.B. Kühlöl) usw. Somit kann das Schwingungsspektrum Informationen auch über die Werkzeugmaschine oder das Verbrauchsmaterial usw. liefern. So ist das Schwingungsspektrum möglicherweise durch die Schwingungen der Werkzeugmaschine, z.B. 200 Hz, moduliert.

Der Sensor 2 wird einen nichtlinearen Frequenzgang aufweisen, die vom Gesamtsystem Werkzeugmaschine, Werkzeug, Werkstück abhängt. Der Frequenzgang ist individuell für jeden Sensor und zudem auch abhängig vom Drehmoment seiner Befestigung, Systemresonanzen, Maschinengeräuschen etc. Eine insbesondere periodische Kalibrierung während der Messungen ist daher zweckmäßig. Die Kalibrierung kann erfolgen, indem der Sensor 2 einen Impuls aussendet und die Impulsantwort ausgewertet wird.

Nachfolgend wird als Ausführungsbeispiel eine Risserkennung beschrieben.

Die Risserkennung beim Belasten von Bauteilen wie etwa Rädern wird durch die breitbandige Echtzeitbetrachtung von Körperschallsignalen mit hoher Zuverlässigkeit ermöglicht.

Eine frequenzdetektive Betrachtung ermöglicht eine trennscharfe Filterung von normalen Arbeitsgeräuschen und spontan auftretenden Bauteilschädigungen aufgrund von Überlastungs- oder Ermüdungsrissen im Gefüge.

Jede Gefügetrennung emittiert eine impulsartige Körperschallemission, die von den normalen Prozessgeräuschen getrennt werden kann.

Eine Echtzeitbetrachtung des vorzugsweise gesamten Frequenzverlaufs über die Zeit ermöglicht es, Veränderungen im Prozessverlauf zu erkennen und auf solche Schwankungen regelnd einzugreifen, so dass vorbeugend auftretende Schäden vermieden werden können.

In Anlagen zum gezielten Herbeiführen von Schädigungen, wie etwa Testständen, kann der Fortschritt eines üblichen Schadensverlaufs beobachtet werden. Damit wird es möglich, nicht erst die Schadensgröße im Nachhinein, sondern den zeitlichen Verlauf der Schadensbildung sowie auch die quantitativen Vorkommen bei der Schadensentwicklung zu bewerten.

Durch den Vergleich des erfassten Schwingungsspektrums mit hinterlegten Schadensmustern und Normmustern ist es möglich, sehr flexibel auf auftretende Schädigungen eines Bauteils oder auf Prozess-Drifts zu reagieren, auch wenn Frequenzbereiche sich verschieben oder verändern oder neue, bisher nicht bekannte Signale erfasst werden.

Bei einer von vorneherein feststehenden Frequenztrennung oder Frequenzfilterung ist ein solches flexibles Reagieren und Erkennen nicht möglich.

Die Erfindung ist auch beim Schweißen, insbesondere beim Laserschweißen, anwendbar.

Bei der Materialbearbeitung mit einem Laser werden die Materialien erhitzt und damit die Spannungen im Gefüge verändert. Jede derartige Spannungsveränderung erzeugt eine Druckwelle, die sich durch das Material ausbreitet. Diese Druckschwankungen als Folge der thermischen Umformung durch Laserenergie können mittels eines Körperschallsensors erfasst und erfindungsgemäß ausgewertet werden.

Derzeit werden optische Systeme zur Überwachung eines Laservorgangs eingesetzt, die das von der Einwirkstelle reflektierte Licht messen und aus dem Spektrum bzw. der Intensität abzuleiten versuchen, wie der tatsächliche Laservorgang vom Material aufgenommen wird. Befriedigende Ergebnisse sind damit nicht immer erreichbar, da mehrere Materialien miteinander zu verbinden sind und der Vorgang des Durchschweißens, also ob die Laserenergie auch die erforderliche Verschmelzung und thermische Durchdringung aller Bauteile bewirkt, durch an der Oberfläche reflektierte Laseremission nicht geprüft werden kann.

Durch Körperschallsensoren an den Bauteilen oder Werkstücken kann erfindungsgemäß erfasst werden, ob Spannungsschwankungen infolge thermischer Erhitzung in den Bauteilen entstehen und die Spannungsschwankungen können analysiert werden für eine Beurteilung des Schweißprozesses.

Die Energieaufnahme durch das Laserlicht erzeugt Temperaturschwankungen im Gefüge und damit variierende Druckspannungen, Druckwellen und Frequenzen, die Rückschlüsse auf die Art der thermischen Veränderungen im Gefüge erlauben. So ist es möglich, die Schweißenergie und/oder die vom Material aufgenommene Energie abzubilden. Insbesondere können Schweißfehler wie das Nicht-Durchschweißen mehrerer zu verbindender Bauteile, das Entstehen von Löchern infolge zu starker Energieübertragung oder das Ausbleiben des Laserstrahls erkannt werden durch erfindungsgemäße mehrdimensionale Auswertung des Schwingungsspektrums.

Der Schwingungssensor oder insbesondere Schallsensor, ggf. mehrere Schallsensoren, können dabei mittels einer Vorrichtung an die Werkstücke schwingungsangekoppelt werden. Der oder die Sensoren können auch an Haltevorrichtungen plaziert werden, die beim Spannen der Bauteile oder Werkstücke in einen schwingungskoppelnden Kontakt zu den Bauteilen oder Werkstücken kommen.

Erfindungsgemäß wird eine In-Process-Überwachung einer Bearbeitung, insbesondere eines Laser-Schweißvorgangs, ermöglicht, bei der keine weiteren Maßnahmen zur Beobachtung oder Bewertung der Qualität erforderlich sind.

Die Erfindung eignet sich auch für die Beobachtung eines Umformprozesses.

Bei jedem Umformprozess von Festkörpern werden Spannungen in das Bauteil eingebracht oder gebrochen. Diese Kraftveränderungen führen zu Druckwellen, die durch das Bauteil bzw. das Werkzeug sich ausbreiten.

Die Frequenzen dieser Druckwellen hängen von der Dynamik des Umformprozesses, von der Geschwindigkeit der Kraft und auch der Gefügestruktur des Materials ab.

Im allgemeinen können sehr hohe Frequenzen auftreten. Die Analyse der Schallemission in Frequenz und Zeit ermöglicht eine präzise Beschreibung des Umformprozesses und bildet quasi einen Fingerabdruck jedes konkreten Umformprozesses. Hierbei sind Variationen durch unterschiedliche Materialeigenschaften und Prozessverläufe möglich.

Das erfindungsgemäße Verfahren kann sowohl beim Kaltumformen als auch beim Warm- oder Heißumformen angewendet werden. Fehler wie etwa beschädigte, gebrochene oder fehlende Umformwerkzeuge können erkannt werden. Variierende Festigkeiten des Bauteils beim Umformen, Abwesenheit oder veränderte Eigenschaften von Betriebsmitteln wie Gleit-/Schmiermitteln, beim Heißumformen insbesondere Variationen in der Temperatur, können erkannt werden. Bereits geringe Temperaturunterschiede von 1° C können zu erheblichen Veränderungen der Umformkräfte und damit zu veränderten Eigenschaften bei der Umformdynamik und den Druckwellen-Emissionen führen.

Kühlt das Bauteil innerhalb des Umform-Prozesses während der Schwingungserfassung ab, kann auch der Entspannungs- bzw. Abkühl- und Schrumpfvorgang und der Gefügeumwandlungsvorgang des Materials mit beobachtet und bewertet werden sowie eine Aussage über den Abkühlprozess getroffen werden.

Dies gilt sowohl für Schwingungen, insbesondere Körperschallemissionen, die aus der Gefügeumwandlung selbst stammen, wie auch aus Emissionen durch Kräfte zwischen Bauteil und Werkzeug, die während der Volumenänderung stattfinden.

Die Erfindung ermöglicht ersichtlich ganz allgemein die insbesondere automatisierte Beobachtung und Bewertung von nahezu allen Bearbeitungsprozessen anhand der während der Bearbeitung einschließlich etwaiger Abkühlphase oder dergleichen auftretenden Schwingungsspektren, die wie beschrieben charakteristische Merkmale für Normverhalten und Abweichungen davon aufweisen. Neben den beispielhaft vorstehend beschriebenen spanabhebenden, schweißbasierten und umformenden Bearbeitungen ist die Erfindung auch beim Fügen und Trennen anwendbar.

Bei jedem Füge- oder Trennvorgang treten verschiedene Teile miteinander in Interaktion. Während der Bewegung reiben die Oberflächen aneinander, werden Materialteile angeschabt, abgetrennt, Kräfte in irgendeiner Form eingebracht. Jede dieser Aktivitäten erzeugt Druckwellen, die durch die beteiligten Bauteile laufen und die für den jeweiligen Füge- oder Trennvorgang charakteristisch sind und typisiert werden können.

Es ist mithin möglich, die Füge- und Trennvorgänge in verschiedenen Eigenschaften zu quantifizieren und zu qualifizieren, also charakteristische Merkmale zu definieren und zu erkennen.

Beispielsweise bieten beim Einpressen einer Welle in eine Buchse, die beide mit Toleranzen gefertigt sind, die Schallemissions-Druckwellen ein Maß für die Einpreßkräfte. Bei zu großem Übermaß oder ungünstiger Toleranzauslegung wird ein sehr starkes Schallsignal produziert, das auf einen Fehler bei der Verpressung hinweisen kann. Mit der erfindungsgemäßen mehrdimensionalen Auswertung des erfassten Schwingungsspektrums kann dieser Fehler erkannt werden, z.B. durch Vergleich mit Soll-Mustern. Ebenso können unterschiedliche Oberflächeneigenschaften wie etwa zu große Oberflächenrauhigkeiten oder Materialveränderungen erkannt werden, da diese charakteristische Eigenschaften in Schwingungsspektrum aufweisen.

Eine Verschraubung stellt im wesentlichen nichts andres dar. Auch hierbei werden Flächen gegeneinander getrieben und gepresst und das aufgewendete Drehmoment erzeugt zusammen mit den Reibungseigenschaften typisierbare Schallemissionen, die wiederum zur Qualifizierung der Verschraubung herangezogen werden können.

Das vorstehende ist auch auf Trennvorgänge wie etwa das Austreiben von Dornen aus Buchsen, Auspressen, Losschrauben, Schneiden etc. anwendbar.

Der Bearbeitungsvorgang ist dabei ganz allgemein erst dann abgeschlossen, wenn keine Veränderungen am Bauteil oder Werkstück mehr auftreten. So kann also z.B. beim Umformen oder Fügen oder Schweißen usw. das Schwingungsspektrum über einen längeren Zeitraum analysiert werden, um z.B. bei Temperaturveränderungen auftretende Spannungen, die u.U. zur Beschädigung der Bauteile führen, auch nach unmittelbarem Abschluss der Einwirkung auf das Bauteil oder Werkstück festzustellen.

## Patentansprüche

1. Verfahren zur Schwingungsanalyse, bei dem während der Verwendung eines Bauteils, bei der Prüfung eines Bauteils und/oder während des Bearbeitens eines Werkstückes (5) durch Zerspanen, Schweißen, Umformen, Fügen und/oder Trennen entstehende Schwingungen erfasst und ausgewertet werden, **dadurch gekennzeichnet, dass** ein Schwingungsspektrum zu verschiedenen Zeiten oder (quasi-)kontinuierlich erfasst wird zum Erzeugen dreidimensionaler Daten basierend auf Zeit, auf Vibrations- oder Schallfrequenz, und auf Vibrations- und/oder Schallamplitude, wobei die dreidimensionalen Daten einer dreidimensionalen Auswertung unterworfen werden, wobei die dreidimensionale Auswertung einen Vergleich der dreidimensionalen Daten mit dreidimensionalen Referenzdaten zum Bestimmen von Abweichungen zwischen den dreidimensionalen Daten und den dreidimensionalen Referenzdaten umfasst.

2. Verfahren nach Anspruch 1, bei dem das Schwingungsspektrum einer Frequenz-Zeit-Analyse unterworfen wird.

3. Verfahren nach Anspruch 1 oder 2, bei dem die Auswertung automatisiert auf Basis einer Mustererkennung durchgeführt wird, wobei die Mustererkennung im über einen Zeitraum erfassten Schwingungsspektrum nach Mustern, die in einer Musterdatenbank gespeichert oder definiert sind, suchen kann.

4. Verfahren nach einem der Ansprüche 1 bis 3, bei dem eine Umhüllende des Schwingungsspektrums gebildet und mit einer Vergleichsumhüllenden verglichen wird.

5. Verfahren nach einem der Ansprüche 1 bis 4, bei dem das Schwingungsspektrum hochfrequent und/oder breitbandig erfasst und/oder ausgewertet wird.

6. Verfahren nach einem der Ansprüche 1 bis 5, bei dem das Schwingungsspektrum im Fall einer Bearbeitung durch Zerspanen mit einer Frequenzauflösung entsprechend der mikroskopischen Körnigkeit des Materials des bearbeiteten Werkstücks (5) und der Zerspanungsbearbeitungsgeschwindigkeit erfasst wird.

7. Verfahren nach einem der Ansprüche 1 bis 6, bei dem das Schwingungsspektrum grafisch dargestellt wird mit den Variablen Frequenz, Zeit, Amplitude oder einer Funktion davon; und/oder
bei dem ein Schallsensor (2) zur Aufnahme des Schwingungsspektrum verwendet wird, wobei
der Schallsensor (2) vorzugsweise kalibriert wird, indem vor der Messung ein Schallsignal über den Schallsensor (2) emittiert, das Echo erfasst und mit einem Soll-Echo verglichen wird.

8. Verfahren nach einem der Ansprüche 1 bis 7, bei dem die Auswertung im Wesentlichen in Echtzeit erfolgt.

9. Verfahren nach einem der Ansprüche 1 bis 8, bei dem das erfasste Schwingungsspektrum in den hörbaren Bereich transformiert wird für eine akustische Bewertung durch einen Bearbeiter.

10. Verfahren nach einem der Ansprüche 1 bis 9, bei dem für Schäden typische Muster im Schwingungsspektrum, insbesondere Überlastungs- und/oder Ermüdungsrisse, erkannt werden.

11. Vorrichtung (1) zum Durchführen einer Schwingungsanalyse nach einem der Ansprüche 1 bis 10, wobei die Vorrichtung mit einem Sensor (2) zum Erfassen eines Schwingungsspektrums, das während der Verwendung eines Bauteils, bei der Prüfung eines Bauteils und/oder während des Bearbeitens eines Werkstückes (5) durch Zerspanen, Schweißen, Umformen, Fügen und/oder Trennen oder dergleichen entsteht, koppelbar ist und eine Auswerteeinrichtung (6) zum dreidimensionalen Auswerten des zu verschiedenen Zeiten oder (quasi-)kontinuierlich erfassten dreidimensionalen Schwingungsspektrums unter Vergleich mit dreidimensionalen Referenzdaten zum Bestimmen von Abweichungen aufweist.

12. Vorrichtung nach Anspruch 11, bei der die Auswerteeinrichtung (6) zum Bilden einer Umhüllenden des Schwingungsspektrums und zum Vergleichen mit einer Vergleichsumhüllenden ausgebildet ist.

13. Vorrichtung nach Anspruch 11 oder 12, bei der ein Hochfrequenz-Sensor zum Erfassen eines Körperschallspektrums vorgesehen ist; und/oder
bei der eine Musterdatenbank mit mehrdimensionalen Schwingungsmustern vorgesehen ist.

14. Musterdatenbank für eine Vorrichtung nach einem der Ansprüche 11 bis 13, umfassend mehrdimensionale Schwingungsmuster, die charakteristisch für Merkmale in Bereichen eines Schwingungsspektrums sind, das während der Verwendung eines Bauteils, bei der Prüfung eines Bauteils und/oder während des Bearbeitens eines Werkstückes (5) durch Zerspanen, Schweißen, Umformen, Fügen und/oder Trennen oder dergleichen entsteht.

15. Verwendung einer Musterdatenbank nach Anspruch 14 für eine Beobachtung eines Bauteils im Betrieb, eine Prüfung eines Bauteils und/oder eine Beobachtung einer maschinellen Bearbeitung eines Werkstückes (5) durch Zerspanen, Schweißen, Umformen, Fügen und/oder Trennen oder dergleichen.

## Claims

1. A method for vibration analysis, wherein vibrations occurring during the use of a component, in the testing of a component and during the processing of a workpiece (5) by chipping, welding, forming, joining and/or separating are recorded and evaluated, **characterised in that** the vibration spectrum is recorded at different times or (quasi-)continuously for the generation of three-dimensional data based on time, on vibration or sound frequency, and on vibration and/or sound amplitude, wherein the three-dimensional data are subjected to a three-dimensional evaluation, wherein the three-dimensional evaluation comprises a comparison of the three-dimensional data with three-dimensional reference data for determining divergences between the three-dimensional data and the three-dimensional reference data.

2. The method according to claim 1, wherein the vibration spectrum is subjected to a frequency-time analysis.

3. The method according to claim 1 or 2, wherein the evaluation is carried out automatically on the basis of pattern recognition, wherein the pattern recognition can seek, in a vibration spectrum recorded over a time period, for patterns which are stored or defined in a pattern database.

4. The method according to any one of claims 1 to 3, wherein an envelope of the vibration spectrum is formed and compared with a comparison envelope.

5. The method according to any one of claims 1 to 4, wherein the vibration spectrum is recorded and/or evaluated using high frequency and/or broadband.

6. The method according to any one of claims 1 to 5, wherein the vibration spectrum in the case of processing by chipping is recorded with a frequency resolution corresponding to the microscopic granularity of the material of the processed workpiece (5) and the chipping machining speed.

7. The method according to any one of claims 1 to 6, wherein the vibration spectrum is represented graphically and with the variables frequency, time, amplitude or a function thereof; and/or
wherein a sound sensor (2) is used to pick up the vibration spectrum, wherein
the sound sensor (2) is preferably calibrated, wherein, before the measurement, a sound signal is emitted via the sound sensor (2), the echo is detected and compared with a set-point echo.

8. The method according to any one of claims 1 to 7, wherein the evaluation essentially takes place in real time.

9. The method according to any one of claims 1 to 8, wherein the recorded vibration spectrum is transformed into the audible range for an acoustic evaluation by an operative.

10. The method according to any one of claims 1 to 9, wherein typical patterns for damage are identified in the vibration spectrum, in particular overload and/or fatigue cracks.

11. An apparatus (1) for performing a vibration analysis according to any one of claims 1 to 10, wherein the apparatus can be coupled to a sensor (2) for recording a vibration spectrum which occurs during the use of a component, in the testing of a component and/or during the processing of a workpiece (5) by chipping, welding, forming, joining and/or separating or suchlike, and comprises an evaluation device (6) for the three-dimensional evaluation of the three-dimensional vibration spectrum recorded at different times or (quasi-)continuously by comparison with three-dimensional reference data for determining divergences.

12. The apparatus according to claim 11, wherein the evaluation device (6) is designed for the formation of an envelope of the vibration spectrum and for comparison with a comparison envelope.

13. The method according to claim 11 or 12, wherein a high-frequency sensor is provided for recording a structure-borne sound spectrum; and/or wherein the pattern database is provided with multi-dimensional vibration patterns.

14. A pattern database for an apparatus according to any one of claims 11 to 13, comprising multi-dimensional vibration patterns, which are characteristic of features in the ranges of a vibration spectrum which occurs during the use of a component, in the testing of a component and/or during the processing of a workpiece (5) by chipping, welding, forming, joining and/or separating or suchlike.

15. Use of a pattern database according to claim 14 for an observation of a component during operation, testing of a component and/or an observation of mechanical machining of a workpiece (5) by chipping, welding, forming, joining and/or separating or suchlike.

## Revendications

1. Procédé d'analyse des oscillations pour lequel les oscillations se produisant pendant l'utilisation d'un composant, lors du contrôle d'un composant et/ou pendant l'usinage d'une pièce (5) par enlèvement de copeaux, soudage, déformation, jointoiement et/ou tronçonnage sont saisies et exploitées, **caractérisé en ce qu'**un spectre d'oscillations est saisi à différents moments ou quasiment en continu pour produire des données tridimensionnelles en se basant sur le temps,, sur la fréquence des vibrations et du son et sur l'amplitude des vibrations et/ou du son, les données tridimensionnelles étant soumises à une évaluation tridimensionnelle, l'évaluation tridimensionnelle comprenant une comparaison des données tridimensionnelles à des données de référence tridimensionnelles pour déterminer des écarts entre les données tridimensionnelles et les données de référence tridimensionnelles.

2. Procédé selon la revendication 1 pour lequel le spectre d'oscillations est soumis à une analyse fréquence-temps.

3. Procédé selon la revendication 1 ou 2 pour lequel l'évaluation est effectuée de façon automatisée sur la base d'une identification de données types, l'identification de données types pouvant rechercher dans un spectre d'oscillations saisi sur une période de temps des modèles qui sont mémorisés ou définis dans une banque de données types.

4. Procédé selon l'une quelconque des revendications 1 à 3, pour lequel une enveloppe du spectre d'oscillations est formée et est comparée à une enveloppe de comparaison.

5. Procédé selon l'une quelconque des revendications 1 à 4, pour lequel le spectre d'oscillations est saisi et/ou évalué à haute fréquence et/ou à large bande.

6. Procédé selon l'une quelconque des revendications 1 à 5, pour lequel le spectre d'oscillations est saisi selon la granulométrie microscopique du matériau de la pièce usinée (5) et de la vitesse d'usinage par enlèvement de copeaux dans le cas d'un usinage par enlèvement de copeaux avec une dissolution de fréquence.

7. Procédé selon l'une quelconque des revendications 1 à 6, pour lequel le spectre d'oscillations est représenté par des avec les variables de fréquence, de temps, d'amplitude ou une fonction de ceux-ci, et/ou
pour lequel un capteur de son (2) est utilisé pour enregistrer le spectre d'oscillations,
le capteur de son (2) étant de préférence étalonné, un signal sonore étant émis avant la mesure par le capteur de son (2), l'écho étant saisi et comparé à un écho théorique.

8. Procédé selon l'une quelconque des revendications 1 à 7, pour lequel l'évaluation a lieu pour l'essentiel en temps réel.

9. Procédé selon l'une quelconque des revendications 1 à 8, pour lequel le spectre d'oscillations saisi est transformé dans la plage audible pour une évaluation acoustique par un opérateur.

10. Procédé selon l'une quelconque des revendications 1 à 9, pour lequel pour des dommages sont identifiés des modèles caractéristiques dans le spectre d'oscillations, notamment des criques de surcharge et/ou de fatigue.

11. Dispositif (1) pour effectuer une analyse d'oscillations selon l'une quelconque des revendications 1 à 10, le dispositif pouvant être couplé à un capteur (2) pour saisir un spectre d'oscillations, qui se produit pendant l'utilisation d'un composant, lors du contrôle d'un composant et/ou pendant l'usinage d'une pièce (5) par enlèvement de copeaux, soudage, déformation, jointoiement et/ou tronçonnage ou opérations de ce type et comportant un dispositif d'évaluation (6) pour l'évaluation tridimensionnelle du spectre d'oscillations tridimensionnel saisi à différents moments ou quasiment en continu en comparaison à des données de référence tridimensionnelles pour déterminer des écarts.

12. Dispositif selon la revendication 11, pour lequel le dispositif d'évaluation (6) est constitué pour former une enveloppe du spectre d'oscillations et pour comparer à une enveloppe de comparaison.

13. Procédé selon la revendication 11 ou 12, pour lequel un capteur à haute fréquence est prévu pour saisir un spectre de son de structure, et/ou pour lequel est prévue une base de données type avec modèles d'oscillations pluridimensionnels.

14. Banque de données types pour un dispositif selon l'une quelconque des revendications 11 à 13, comprenant des modèles d'oscillations pluridimensionnels qui sont typiques pour les caractéristiques dans des zones d'un spectre d'oscillations, qui se produit pendant l'utilisation d'un composant, lors du contrôle d'un composant et/ou pendant l'usinage d'une pièce (5) par enlèvement de copeaux, soudage, déformation, jointoiement et/ou tronçonnage ou opérations de ce type.

15. Utilisation d'une banque de données types selon la revendication 14 pour une observation d'un composant en fonctionnement, un contrôle d'un composant et/ou une observation d'un usinage à la machine d'une pièce (5) par enlèvement de copeaux, soudage, déformation, jointoiement et/ou tronçonnage ou opérations de ce type.
